# EUROPEAN PATENT SPECIFICATION

(11) **EP 1 677 560 B1**
(45) Date of publication and mention of the grant of the patent: **17.02.2010**
(21) Application number: 05028560.0
(22) Date of filing: 28.12.2005
(51) Int. Cl.: H04W 4/10

(54) **Method and apparatus for increasing call receiving rate of a terminal**
Verfahren und Einrichtung zur Erhöhung der Anruf-Empfangsrate eines Endgerätes
Procédé et équipement pour augmenter le taux de réception d'appels d'un terminal

(30) Priority: 28.12.2004 KR 2004113813
(43) Date of publication of application: 05.07.2006
(73) Proprietor: LG Electronics Inc., Youngdungpo-gu Seoul (KR)
(72) Inventor: Ryoo, Bong Suk, Songpa-gu, Seoul (KR)
(74) Representative: Katérle, Axel

(56) References cited:
- WO-A-00/69185
- WO-A-02/093953
- "3rd Generation Partnership Project; Technical Specification Group Services and System Aspects; 3GPP Enablers for OMA PoC Services; Stage 2 (Release 6)" 3GPP TR 23.979 V2.0.0 (2004-11) TECHNICAL REPORT, [Online] 21 December 2004 (2004-12-21), pages 1-37, XP002443643 Retrieved from the Internet: URL:http://www.3gpp.org/ftp/Specs/html-inf o/23979.htm> [retrieved on 2007-07-22]
- "Push to Talk over Cellular (PoC) - Architecture Draft Version 1.0 - 17 November 2004 OMA-AD_PoC-V1_0-20041117-D" OPEN MOBILE ALLIANCE TECHNICAL SPECIFICATION, [Online] 17 November 2004 (2004-11-17), pages 1-152, XP002443644 Retrieved from the Internet: URL:http://member.openmobilealliance.org/f tp/Public_documents/POC/Permanent_document s/> [retrieved on 2007-07-22]

## Description

### BACKGROUND OF THE INVENTION

### Field of the Invention

The present invention relates to a method and apparatus for increasing a call receiving rate of a terminal.

### Description of the Related Art

Generally, a (push-to-push) PTP communication system is an example of one system which enables a point-to-multipoint communication. In contrast, a push-to-talk (PTT) communication system allows one user to forward information to other network members for only a limited time. In general, PTT communications enable group communications between a plurality of users as well as point-to-point communications. For instance, in a PTT communication system, the allowed user has an exclusive transmission privilege. Meanwhile, other network members can only receive communications while the allowed user (i.e., the user having the exclusive transmission privilege), is transmitting information.

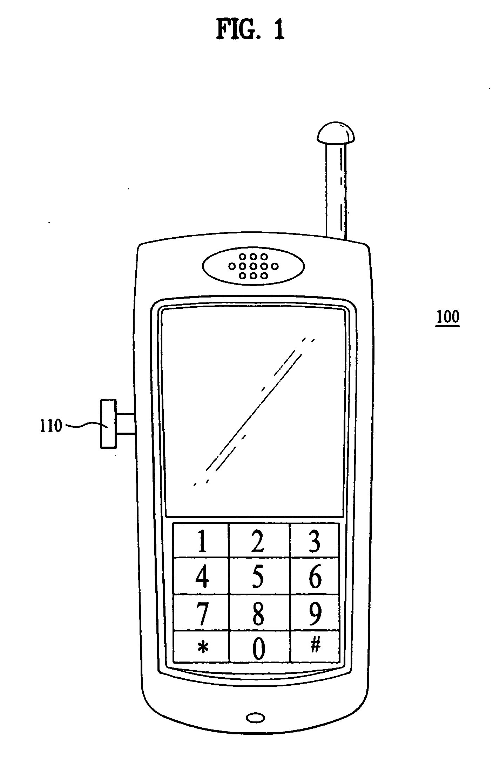

FIG. 1 is a diagram of a general PTT terminal 100, which is shown having PTT switch 110 located on one side of the PTT terminal. PTT terminal 100 includes two operational modes; namely, a transmission mode and a reception mode. In the transmission mode, the PTT terminal transmits voice data, but does not receive voice data. In the reception mode, the PTT terminal receives voice data, but does not transmit voice data. For instance, if a user having a transmission privilege presses PTT switch 110, the PTT terminal is switched to a transmission mode. Once PTT switch 110 is turned on, the PTT terminal is switched to a transmission mode and voice data transmission is allowed. On the other hand, when PTT switch 110 is turned off, PTT terminal 100 is switched from the transmission mode to a reception mode.

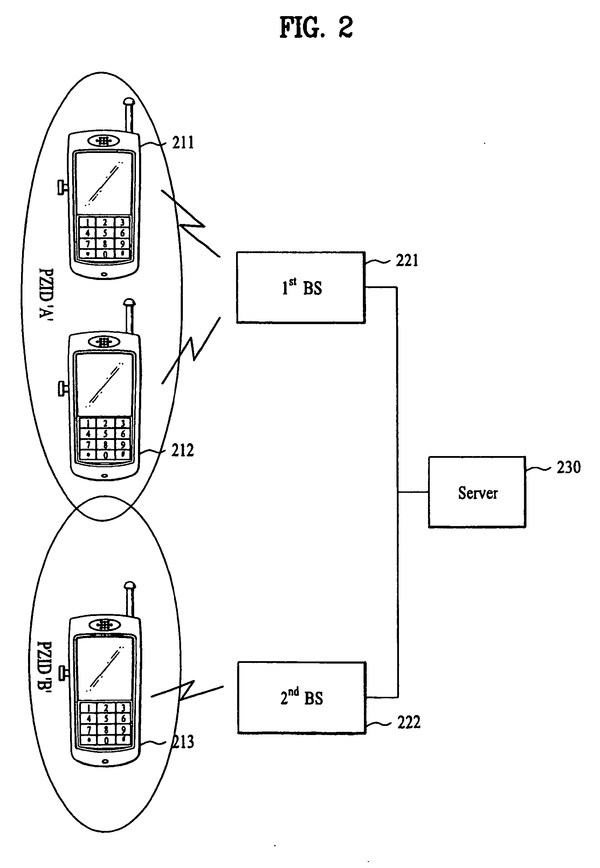

FIG. 2 is a schematic diagram of a system for performing PTT communications. In this figure, the PTT communication system consists of a plurality of PTT terminals 211, 212, and 213, a plurality of base stations 221 and 222, and a PTT server 230. First and second PTT terminals 211 and 212 are shown in wireless communication with first base station 221, and third PTT terminal 213 is shown in wireless communication with second base station 222. First and second base stations 221 and 222 each communicate with server 230 via the Internet, an Intranet, or an Extranet.

The PTT communication system has various areas which denote a prescribed range of an associated base station. These areas define a plurality of packet zones, each having a particular packet zone identifier (referred to herein as "PZID"). The PZIDs are used to identify each of the packet zones. Communication in the PTT communication system is carried out using the PZIDs.

In FIG. 2, first and second PTT terminals 211 and 212 are shown located in packet zone PZID "A," and third PTT terminal 213 is shown located in packet zone PZID "B." First base station 221 supports communications for PTT terminals located in packet zone PZID "A," while second base station 222 supports communications for PTT terminals located in packet zone PZID "B." First and second PTT terminals 211 and 212 are located in packet zone PZID "A," and therefore communicate with first base station 221. Similarly, third PTT terminal 213 is located in packet zone PZID "B" and communicates with second base station 222.

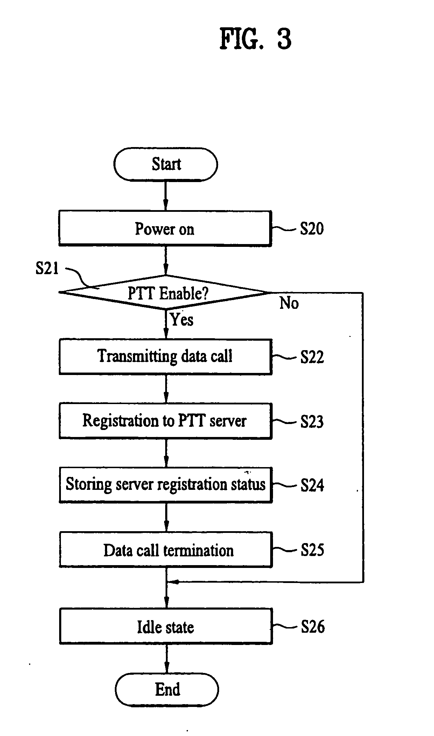

FIG. 3 is a flowchart depicting a method for registering a PTT terminal, such as PTT terminal 100, to a server. At block S20, the power to a PTT terminal is turned on. Decision block S21 determines whether or not the PTT terminal is in a mode for enabling PTT communications. If the PTT terminal is not in the enabling mode, control flows to block S26 and the PTT terminal enters an idle state. On the other hand, if the PTT terminal is in the enabling mode, the PTT terminal transmits a data call (block S22). For example, a data call is transmitted responsive to a user pressing PTT switch 110. Transmission of the data call causes the registration of the PTT terminal to a PTT server (block S23). In block S24, a server registration status is stored in memory based upon the presence or absence of the registration of the PTT terminal to the PTT server. At block S25 the data call is terminated by the PTT terminal, and the PTT terminal enters an idle state (block S26).

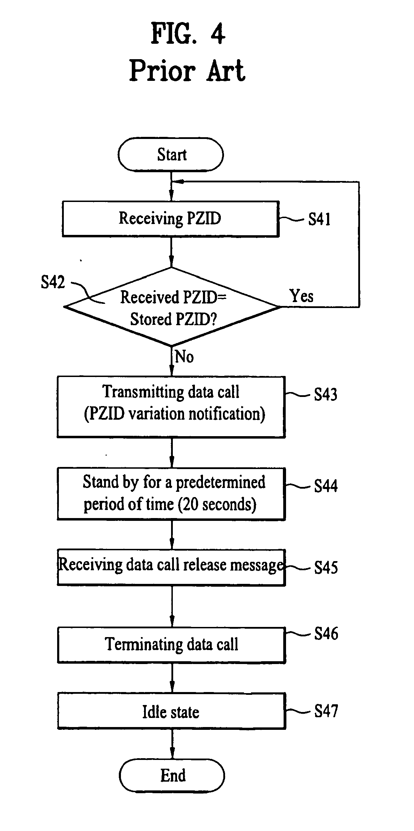

FIG. 4 is a flowchart depicting a conventional call connecting procedure of a PTT terminal which has moved from one packet zone, having a particular PZID value, and into another packet zone, having a different PZID value.

At block S41, a PTT terminal receives a PZID value from a base station. In comparison block S42, the PTT terminal compares the received PZID value to its stored PZID value. If the received PZID value and the stored PZID value are equal, this indicates that the PTT terminal has not moved into a different packet zone and control flows back to block S41 so that the receiving and comparison operations may be repeated.

Referring still to block S42, if the received PZID value and the stored PZID value are not equal, this indicates that the PTT terminal has indeed moved into a different packet zone and control flows to block S43. At this point, the PTT terminal transmits a data call notifying the base station of the PZID variation.

After the data call has been transmitted, the PTT terminal enters a standby mode for a predetermined period of time (e.g., about 20 seconds) (block S44). The PTT terminal maintains its current call state during the standby mode time period. After the standby mode time period has elapsed, the PTT terminal receives a data call release message transmitted by the base station (block S45). After receiving the data call release message, the PTT terminal terminates the currently connected data call (block S46). The PTT terminal then enters an idle state (S47).

The operations depicted in FIG. 4 illustrate that a conventional PTT terminal notifies a base station that the PTT terminal is moving from one packet zone and into a different packet zone having a different PZID value by sending a data call to the base station. In such a system, the PTT terminal is forced to maintain the data call connection for a predetermined period of time (e.g., 20 seconds) during the standby mode. The PTT terminal maintains this data call connection until it receives the data call release message from the base station. However, in a conventional PTT terminal, call reception is not possible when the PTT terminal is in the standby mode.

WO 00/69185 A2 is concerned with group communication systems and is specifically directed to setting up a group call and designating traffic channels for the originating terminal to provide communications between the originating and called terminals.

WO 02/093953 A1 aims to reduce the total dormancy wakeup time and the PTT latency in a group communication network. For this, group call signalling is exchanged even when mobile terminals are dormant and no traffic channel is active.

The Technical Specification 3GPP TR 23.979, version 2.0.0, November 2004 as well as a document entitled "Push to talk over Cellular (PoC) - Architecture", Draft Version 1.0, 17 November 2004, by the Open Mobile Alliance, provide background information on PTT communication over cellular networks.

### Summary of the invention

It is an object of the present invention to achieve an increase in the call receiving rate of a terminal. For this, the present invention provides a method in accordance with claim 1, a wireless communication system in accordance with claim 9 as well as a base station in accordance with claim 12. Preferred embodiments of the invention are given in the dependent sub-claims.

An embodiment of the invention is directed to a method for increasing call receiving rate of a terminal. This method includes establishing a data call between the terminal and a base station, and determining the presence or absence of registration of the terminal to the server. The server supports wireless communication between the terminal and the base station. Another operation includes determining a timing point for transmitting a message for the release of the data call from the base station to the terminal according to the presence or absence of the registration. An example of the wireless communication is a PTT (push-to-talk) communication.

In one aspect, the presence or absence of registration of the terminal is determined after the terminal has moved from a location or packet zone served by another base station to a location or packet zone served by the current base station.

In another aspect, the method further includes receiving a base station identifier, such as a packet zone identifier (PZID), from the base station. If the base station identifier is different than a previously stored base station identifier, then the establishing operation is initiated by transmitting from the terminal the data call for notifying the base station of a base station identification variation.

In yet another aspect, the method further includes comparing the base station identifier with the previously stored base station identifier to determine if the base station identifier is different than the previously stored base station identifier.

In an embodiment, the method further includes connecting the data call with the terminal. This connecting operation may be performed by the base station. If the base station identifier is different than the previously stored base station identifier, then the method further includes storing the base station identifier of the base station at the terminal.

If the terminal is registered to the server, the method further includes transmitting from the base station the message for the release of the data call. Alternatively, if the terminal is not registered to the server, the method further includes delaying for a predetermined period of time, and after the predetermined period of time has elapsed, transmitting from the base station the message for the release of the data call.

In yet another embodiment, the method further includes receiving the message for the release of the data call at the terminal, and causing the terminal to enter an idle state responsive to the receiving of the message.

In another aspect, the method further includes receiving the message for the release of the data call at the terminal, and entering an idle state at the terminal after the message is received at the terminal.

In still yet another aspect, the method further includes storing a state of the registration at the server.

Another embodiment of the present invention is directed to a wireless communication system having a terminal, a base station, and a server. The base station is structured to establish a data call between the terminal and the base station. The server supports wireless communication between the terminal and the base station, and is structured to register the terminal responsive to the data call. The base station is further structured to determine a timing point for transmitting a message for the release of the data call from the base station to the terminal according to the presence or absence of the registration of the terminal with the server.

In yet another embodiment, the terminal is structured to receive a base station identifier from the base station, and if the base station identifier is different than a previously stored base station identifier, then the data call is initiated by the terminal.

In still another embodiment, the terminal is structured to receive a base station identifier from the base station, and if the base station identifier is different than a previously stored base station identifier, then the base station identifier of the base station is stored at the terminal.

If the terminal is registered to the server, the base station is further structured to transmit the message for the release of the data call. Alternatively, if the terminal is not registered to the server, the base station is further structured to delay for a predetermined period of time, and after the predetermined period of time has elapsed, transmit the message for the release of the data call.

Yet another embodiment of the present invention is directed to a base station for increasing call receiving rate of a terminal. The base station includes a receiver, a transmitter, and a processor. The receiver is structured to receive signals from the terminal, and the transmitter is structured to transmit signals to the terminal. The processor is operatively coupled to a server that supports wireless communication between the terminal and the base station. The processor is configured to determine a timing point for transmitting a message for a release of a data call from the base station to the terminal according to a presence or absence of registration of the terminal to the server.

In an alternative embodiment, the presence or absence of registration is determined after the terminal has moved from a packet zone associated with another base station to a packet zone associated with the base station.

If the terminal is registered to the server, then the processor is further configured to cause the message for the release of the data call to be transmitted from the base station. Alternatively, if the terminal is not registered to the server, then the processor is further configured to delay for a predetermined period of time, and after the predetermined period of time has elapsed, cause the message for the release of the data call to be transmitted from the base station.

Additional features and advantages of the invention will be set forth in the description which follows, and in part will be apparent from the description, or may be learned by practice of the invention. It is to be understood that both the foregoing general description and the following detailed description of the present invention are exemplary and explanatory and are intended to provide further explanation of the invention as claimed.

These and other embodiments will also become readily apparent to those skilled in the art from the following detailed description of the embodiments having reference to the attached figures, the invention not being limited to any particular embodiments disclosed.

### BRIEF DESCRIPTION OF THE DRAWINGS

The accompanying drawings, which are included to provide a further understanding of the invention, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.
FIG. 1 is a diagram of a general PTT terminal;
FIG. 2 is a schematic diagram of a system for performing PTT communications;
FIG. 3 is a flowchart of a method for registering a PTT terminal to a server;
FIG. 4 is a flowchart depicting a conventional call connecting procedure of a PTT terminal which has moved from one packet zone and into another packet zone;
FIG. 5 is a flowchart depicting a method for increasing call receiving rate of a PTT terminal according to one embodiment of the present invention; and
FIG. 6 is a simplified block diagram showing various components of a typical base station that may be implemented in the PTT communication system depicted in FIG. 2.

### DETAILED DESCRIPTION OF THE PREFERRED EMBODIMENTS

Embodiments of the present invention may utilize PTT terminal 100, as shown and described in conjunction with FIG. 1, as well as the various components depicted in the PTT communication system depicted in FIG. 2.

Referring back to FIG. 2, each of the base stations has a unique PZID, which may be used to identify the base station. The base station transmits its unique PZID value to a plurality of PTT terminals located within its PZID zone. At some point during operation, the PTT terminal transmits a data call to the base station. This data call registers the PTT terminal to the base station that serves the PZID zone within which the PTT terminal is currently located. This results in a data call being established between the PTT terminal and the base station. registration message to the base station. After having been connected to the PTT server, the PTT terminal stores in memory a state of whether server registration succeeds or fails according to the presence or absence of the registration to the PTT server.

After successfully registering to the PTT server, the PTT terminal stores a PZID value received from the base station in the PZID zone within which the PTT terminal is currently located. As an example, in FIG. 2, PTT terminal 211 is located in PZID zone "A" and is therefore registered with first base station 221. PTT terminal 211 would therefore store the identified PZID value in its memory for later use.

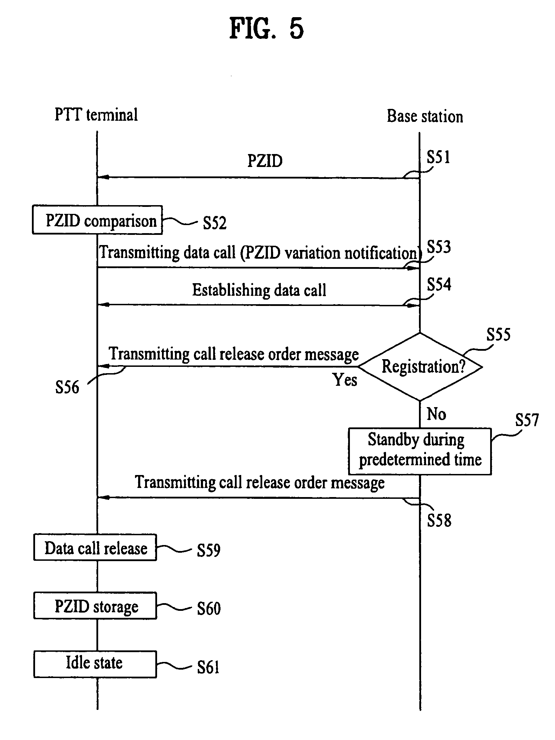

As will be described in more detail in conjunction with FIG. 5, a data call may be established between the PTT terminal and the base station whenever a change in PZID values has been detected. The base station then checks whether the corresponding PTT terminal is registered to the PTT server. To accomplish this, the base station queries PTT server 230 to determine whether the PTT terminal is registered to the PTT server.

In accordance with an embodiment of the invention, the base station determines the transmission timing of a call release order message that is to be transmitted to the PTT terminal according to whether or not the PTT terminal is registered to the PTT server. For instance, if the PTT terminal is registered to the PTT server, the base station may transmit a call release order message to the PTT terminal after the data call has been established between the PTT terminal and the base station. On the other hand, if the PTT terminal is not registered to the PTT server, the base station delays transmission of the call release order message to the PTT terminal for a predetermined period of time.

FIG. 5 is a flowchart depicting a method for increasing call receiving rate of a PTT terminal according to one embodiment of the present invention. Initially, the PTT terminal has previously received and stored a PZID value, which had been communicated to the PTT terminal from a base station.

At some point, the PTT terminal receives another PZID value from a base station (operation S51). This base station may be the same base station, or it may be a different base station than the one that previously sent the PTT terminal the PZID value that is stored in memory. At block S52, the PTT terminal compares the just-received PZID value to the stored PZID value.

The PTT terminal has not moved into a different packet zone if the received PZID value and the stored PZID value are equal. However, if the received PZID value and the stored PZID value are not equal, then such a condition indicates that the PTT terminal has indeed moved into a different packet zone. In such a scenario, the PTT terminal then transmits a data call to the base station notifying the base station of the PZID variation (operation S53). Responsive to the data call transmitted by the PTT terminal, a data call is established between the PTT terminal and the base station (operation S54).

While the data call is established, the base station checks whether the PTT terminal is registered to a server (block S55). In this example, the server is a PTT server supporting PTT communications. If the PTT terminal is registered to the server, the base station transmits a call release order message to the PTT terminal for releasing the currently established data call (operation S56), and control flows to block S59. However, if the PTT terminal is not registered to the server, the base station enters a standby mode for a predetermined period of time (e.g., about 20 seconds), and then transmits a call release order message to the PTT terminal (operations S57 and S58). During the standby time period, the PTT terminal maintains the established state of the data call.

Once the PTT terminal receives the call release order message, either by operation S56 or by operation S58, the PTT terminal releases the current established data call (block S59). The PTT terminal also stores the new PZID in its memory, and then enters an idle state (blocks S60 and S61).

The operations depicted in FIG. 5 illustrate that a PTT terminal transmits a data call to the base station to notify the base station of a PZID variation. If the PTT terminal is already registered to the PTT server, the PTT terminal receives the call release order message from the base station once the data call has been established between the base station and the PTT terminal. Thus, it is unnecessary to maintain the call-established state during any such standby time period, which is the case when the PTT terminal is not registered to the PTT server. Accordingly, embodiments of the present invention provide a number of benefits.

First of all, the amount of time for enabling call reception is increased whenever the PTT terminal enters into a new packet zone having a different PZID value. For example, in a conventional PTT communication system, if the PTT terminal moves into a packet zone having a different PZID value, the call-established state between the PTT terminal and the base station is maintained for a prescribed period of time. This call is maintained regardless of the presence or absence of the registration of the PTT terminal to the PTT server. This is not the case in the embodiment of FIG. 5, which does not require the established call to be maintained in situations in which the PTT terminal is registered to the PTT server. Accordingly, embodiments of the present invention enhance the call receiving rate of the PTT terminal whenever this terminal enters a new packet zone having a different PZID value. This feature is especially useful for those users living or traveling in areas serviced by various base stations having different packet zones and correspondingly different PZID values.

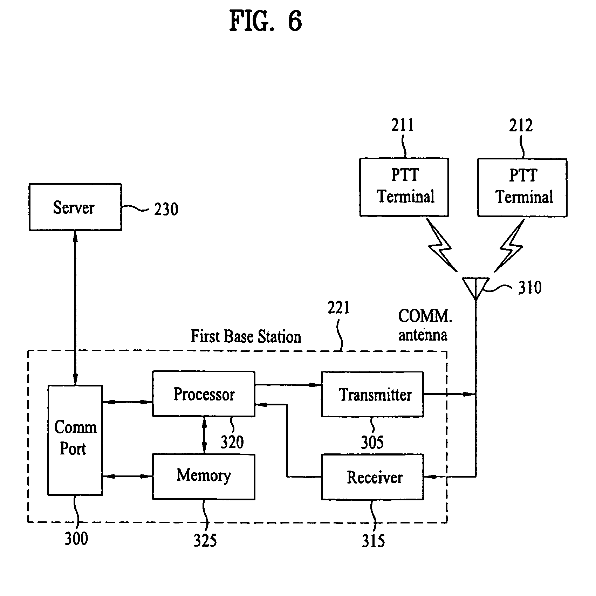

FIG. 6 is a simplified block diagram showing various components of a typical base station that may be implemented in the PTT communication system depicted in FIG. 2. For instance, PTT terminals 211 and 212 are in wireless communication with first base station 221, which is shown operatively coupled to server 230 via communication port 300. Other base stations may be similarly configured, but have been omitted from this figure for clarity.

Signaling to be transmitted by first base station 221 is processed and subsequently transmitted by transmitter 305. This signal is then transmitted via antenna 310 to PTT terminals within the packet zone coverage area of the first base station. A specific example of such a communication is the transmission of voice data from other PTT terminals.

Signaling transmitted by PTT terminals 211 and 212 are received by the first base station at antenna 310. The received signal is then routed to receiver 315 which processes the received signal to provide various types of information to processor 320. The processor is configured to, among other things, determine a timing point for transmitting a message for a release of a data call from the base station to the terminal according to a presence or absence of registration of the terminal to the server. Memory unit 325 may be used to store program codes and data for processor 320.

The foregoing embodiments and advantages are merely exemplary and are not to be construed as limiting the present invention. The present teaching can be readily applied to other types of apparatuses and methods. The description of the present invention is intended to be illustrative, and not to limit the scope of the claims. Many alternatives, modifications, and variations will be apparent to those skilled in the art.

## Claims

1. A method for increasing call receiving rate of a terminal, the method comprising:
- establishing (S54) a data call between the terminal and a base station for a wireless communication;
- determining (S55) presence or absence of registration of the terminal to a server supporting the wireless communication; and
- transmitting (S56, S58) from the base station to the terminal a message for a release of the data call;
**characterized by**:
- if it is determined that the terminal is not registered to the server, delaying (S57) transmission of the message for the release of the data call until a predetermined period of time has elapsed; and
- if it is determined that the terminal is registered to the server, transmitting the message for the release of the data call without delaying by the predetermined period of time.

2. The method of claim 1, wherein the wireless communication is a PTT, push-to-talk, communication.

3. The method of claim 1, wherein the presence or absence of registration is determined after the terminal has moved from a location served by another base station to a location served by the base station.

4. The method of claim 1, wherein the presence or absence of registration is determined after the terminal has moved from a packet zone associated with another base station to a packet zone associated with the base station.

5. The method of claim 4, the method further comprising:
- receiving (S51) a base station identifier from the base station;
- comparing (S52) the received base station identifier with a previously stored base station identifier;
- if the received base station identifier is different than the previously stored base station identifier, storing (S60) the received base station identifier of the base station at the terminal and initiating the establishment of the data call by transmitting (S53) from the terminal the data call for notifying the base station of a base station identification variation.

6. The method of claim 5, wherein the base station identifier is a packet zone identifier, PZID.

7. The method of claim 1, the method further comprising:
- receiving the message for the release of the data call at the terminal; and
- causing (S59, S61) the terminal to enter an idle state responsive to the receiving of the message.

8. The method of claim 1, the method further comprising:
- storing (S24) a state of the registration to the server.

9. A wireless communication system, comprising:
- a terminal (211, 212);
- a base station (221) structured to establish a data call between the terminal and the base station for a wireless communication; and
- a server (230) supporting the wireless communication and structured to register the terminal responsive to the data call, wherein the base station is further structured to determine presence or absence of registration of the terminal to the server and transmit to the terminal a message for a release of the data call;
**characterized in that** the base station (221) is further structured to:
- delay transmission of the message for the release of the data call until a predetermined period of time has elapsed, if it is determined that the terminal is not registered to the server; and
- transmit the message for the release of the data call without delaying by the predetermined period of time, if it is determined that the terminal is registered to the server.

10. The wireless communication system of claim 9, wherein the terminal (211, 212) is structured to receive a base station identifier from the base station (221), and initiate the data call if the received base station identifier is different than a previously stored base station identifier.

11. The wireless communication system of claim 9, wherein the terminal (211, 212) is structured to receive a base station identifier from the base station (221), and store the received base station identifier if the received base station identifier is different than a previously stored base station identifier.

12. A base station for increasing call receiving rate of a terminal, the base station comprising:
- a receiver (315) structured to receive signals from the terminal (211, 212);
- a transmitter (305) structured to transmit signals to the terminal; and
- a processor (320) operatively coupled to a server (230) supporting wireless communication between the terminal and the base station, wherein the processor is configured to determine presence or absence of registration of the terminal to the server and cause a message for a release of a data call to be transmitted from the base station to the terminal;
**characterized in that** the processor (320) is further configured to:
- delay transmission of the message for the release of the data call until a predetermined period of time has elapsed, if it is determined that the terminal is not registered to the server; and
- cause transmission of the message for the release of the data call without delaying by the predetermined period of time, if it is determined that the terminal is registered to the server.

13. The base station of claim 12, wherein the processor (320) is further configured to determine the presence or absence of registration after the terminal has moved from a packet zone associated with another base station to a packet zone associated with the base station.

## Patentansprüche

1. Verfahren zur Erhöhung der Rufempfangsrate eines Endgeräts, wobei das Verfahren umfasst:
- Herstellen (S54) eines Datenrufs zwischen dem Endgerät und einer Basisstation für eine drahtlose Kommunikation,
- Ermitteln (S55) des Vorhandenseins oder Fehlens einer Registrierung des Endgeräts bei einem die drahtlose Kommunikation unterstützenden Server und
- Übermitteln (S56, S58) einer Nachricht zur Beendigung des Datenrufs von der Basisstation zum Endgerät,
**gekennzeichnet durch**:
- Verzögern (S57) der Übermittlung der Nachricht für die Beendigung des Datenrufs bis zum Ablauf einer vorbestimmten Zeitdauer, falls festgestellt wird, dass das Endgerät nicht bei dem Server registriert ist, und
- Übermitteln der Nachricht für die Beendigung des Datenrufs ohne Verzögerung um die vorbestimmte Zeitdauer, falls festgestellt wird, dass das Endgerät bei dem Server registriert ist.

2. Verfahren nach Anspruch 1, wobei die drahtlose Kommunikation eine PTT, d.h. Push-to-Talk Kommunikation ist.

3. Verfahren nach Anspruch 1, wobei das Vorhandensein oder Fehlen einer Registrierung ermittelt wird, nachdem sich das Endgerät von einem Ort, der von einer anderen Basisstation bedient wird, zu einem Ort bewegt hat, der von der Basisstation bedient wird.

4. Verfahren nach Anspruch 1, wobei das Vorhandensein oder Fehlen einer Registrierung ermittelt wird, nachdem sich das Endgerät von einer Paketzone, die einer anderen Basisstation zugeordnet ist, zu einer Paketzone bewegt hat, die der Basisstation zugeordnet ist.

5. Verfahren nach Anspruch 4, wobei das Verfahren ferner umfasst:
- Empfangen (S51) einer Basisstationskennung von der Basisstation,
- Vergleichen (S52) der empfangenen Basisstationskennung mit einer zuvor gespeicherten Basisstationskennung,
- falls die empfangene Basisstationskennung von der zuvor gespeicherten Basisstationskennung verschieden ist, Speichern (S60) der empfangenen Basisstationskennung der Basisstation im Endgerät und Veranlassen der Herstellung des Datenrufs durch Absenden (S53) des Datenrufs von dem Endgerät zur Mitteilung einer Basisstationskennungsänderung an die Basisstation.

6. Verfahren nach Anspruch 5, wobei die Basisstationskennung eine Paketzonenkennung, PZID, ist.

7. Verfahren nach Anspruch 1, wobei das Verfahren ferner umfasst:
- Empfangen der Nachricht für die Beendigung des Datenrufs am Endgerät und
- Bewirken (S59, S61) in Antwort auf den Empfang der Nachricht, dass das Endgerät in einen Ruhezustand geht.

8. Verfahren nach Anspruch 1, wobei das Verfahren ferner umfasst:
- Speichern (S24) eines Status der Registrierung bei dem Server.

9. Drahtloses Kommunikationssystem, umfassend:
- ein Endgerät (211, 212),
- eine Basisstation (221), welche für die Herstellung eines Datenrufs zwischen dem Endgerät und der Basisstation für eine drahtlose Kommunikation eingerichtet ist, und
- einen Server (230), welcher die drahtlose Kommunikation unterstützt und dazu eingerichtet ist, das Endgerät in Antwort auf den Datenruf zu registrieren, wobei die Basisstation ferner dazu eingerichtet ist, das Vorhandensein oder Fehlen einer Registrierung des Endgeräts bei dem Server zu ermitteln und eine Nachricht zur Beendigung des Datenrufs an das Endgerät zu übermitteln,
**dadurch gekennzeichnet, dass** die Basisstation (221) ferner dazu eingerichtet ist:
- die Übermittlung der Nachricht für die Beendigung des Datenrufs bis zum Ablauf einer vorbestimmten Zeitdauer zu verzögern, falls festgestellt wird, dass das Endgerät nicht bei dem Server registriert ist, und
- die Nachricht für die Beendigung des Datenrufs ohne Verzögerung um die vorbestimmte Zeitdauer zu übermitteln, falls festgestellt wird, dass das Endgerät bei dem Server registriert ist.

10. Drahtloses Kommunikationssystem nach Anspruch 9, wobei das Endgerät (211, 212) dazu eingerichtet ist, eine Basisstationskennung von der Basisstation (221) zu empfangen und den Datenruf zu veranlassen, wenn die empfangene Basisstationskennung von einer zuvor gespeicherten Basisstationskennung verschieden ist.

11. Drahtloses Kommunikationssystem nach Anspruch 9, wobei das Endgerät (211, 212) dazu eingerichtet ist, eine Basisstationskennung von der Basisstation (221) zu empfangen und die empfangene Basisstationskennung zu speichern, falls die empfangene Basisstationskennung von einer zuvor gespeicherten Basisstationskennung verschieden ist.

12. Basisstation zur Erhöhung der Rufempfangsrate eines Endgeräts, wobei die Basisstation umfasst:
- einen Empfänger (315), welcher dazu eingerichtet ist, Signale von dem Endgerät (211, 212) zu empfangen,
- einen Sender (305), welcher dazu eingerichtet ist, Signale an das Endgerät zu senden, und
- einen Prozessor (320), welcher betriebsmäßig mit einem eine drahtlose Kommunikation zwischen dem Endgerät und der Basisstation unterstützenden Server (230) gekoppelt ist, wobei der Prozessor dazu eingerichtet ist, das Vorhandensein oder Fehlen einer Registrierung des Endgeräts bei dem Server festzustellen und die Absendung einer Nachricht zur Beendigung eines Datenrufs von der Basisstation an das Endgerät zu bewirken,
**dadurch gekennzeichnet, dass** der Prozessor (320) ferner dazu eingerichtet ist:
- die Absendung der Nachricht für die Beendigung des Datenrufs bis zum Ablauf einer vorbestimmten Zeitdauer zu verzögern, falls festgestellt wird, dass das Endgerät nicht bei dem Server registriert ist, und
- die Absendung der Nachricht für die Beendigung des Datenrufs ohne Verzögerung um die vorbestimmte Zeitdauer zu bewirken, falls festgestellt wird, dass das Endgerät bei dem Server registriert ist.

13. Basisstation nach Anspruch 12, wobei der Prozessor (320) ferner dazu eingerichtet ist, das Vorhandensein oder Fehlen der Registrierung zu ermitteln, nachdem sich das Endgerät von einer Paketzone, die einer anderen Basisstation zugeordnet ist, in eine Paketzone bewegt hat, die der Basisstation zugeordnet ist.

## Revendications

1. Procédé d'augmentation du taux de réception d'appels d'un terminal, le procédé comprenant :
- l'établissement (S54) d'un appel en mode données entre le terminal et une station de base pour une communication sans fil ;
- la détermination (S55) de la présence ou de l'absence d'enregistrement du terminal auprès d'un serveur supportant la communication sans fil ; et
- la transmission (S56, S58) de la station de base jusqu'au terminal d'un message pour une libération de l'appel en mode données ;
**caractérisé par** :
- s'il est déterminé que le terminal n'est pas enregistré auprès du serveur, le retard (S57) de la transmission du message pour la libération de l'appel en mode données jusqu'à ce qu'une période de temps prédéterminée se soit écoulée ; et
- s'il est déterminé que le terminal est enregistré auprès du serveur, la transmission du message pour la libération de l'appel en mode données sans retard de la période de temps prédéterminée.

2. Procédé selon la revendication 1, dans lequel la communication sans fil est une communication de type PTT, messagerie vocale instantanée (Push-to-Talk en anglais).

3. Procédé selon la revendication 1, dans lequel la présence ou l'absence d'enregistrement est déterminée après que le terminal s'est déplacé d'un emplacement desservi par une autre station de base jusqu'à un emplacement desservi par la station de base.

4. Procédé selon la revendication 1, dans lequel la présence ou l'absence d'enregistrement est déterminée après que le terminal s'est déplacé d'une zone de paquets associée avec une autre station de base jusqu'à une zone de paquets associée avec la station de base.

5. Procédé selon la revendication 4, le procédé comprenant en outre :
- la réception (S51) d'un identifiant de station de base de la station de base ;
- la comparaison (S52) de l'identifiant de station de base reçu avec un identifiant de station de base mémorisé antérieurement ;
- si l'identifiant de station de base reçu est différent de l'identifiant de station de base mémorisé antérieurement, la mémorisation (S60) de l'identifiant de station de base reçu de la station de base au niveau du terminal et l'initiation de l'établissement de l'appel en mode données en transmettant (S53) à partir du terminal l'appel en mode données pour notifier la station de base d'une variation d'identification de station de base.

6. Procédé selon la revendication 5, dans lequel l'identifiant de station de base est un identifiant de zone de paquets, PZID.

7. Procédé selon la revendication 1, le procédé comprenant en outre :
- la réception du message pour la libération de l'appel en mode données au niveau du terminal ; et
- le passage (S59, S61) du terminal en mode veille en réponse à la réception du message.

8. Procédé selon la revendication 1, le procédé comprenant en outre :
- la mémorisation (S24) d'un état de l'enregistrement auprès du serveur.

9. Système de communication sans fil, comprenant :
- un terminal (211, 212) ;
- une station de base (221) structurée pour établir un appel en mode données entre le terminal et la station de base pour une communication sans fil ; et
- un serveur (230) supportant la communication sans fil et structuré pour enregistrer le terminal en réponse à l'appel en mode données, dans lequel la station de base est en outre structurée pour déterminer la présence ou l'absence d'enregistrement du terminal auprès du serveur et transmettre au terminal un message pour une libération de l'appel en mode données ;
**caractérisé en ce que** la station de base (221) est en outre structurée pour :
- retarder la transmission du message pour la libération de l'appel en mode données jusqu'à ce qu'une période de temps prédéterminée se soit écoulée, s'il est déterminé que le terminal n'est pas enregistré auprès du serveur ; et
- transmettre le message pour la libération de l'appel en mode données sans retard de la période de temps prédéterminée, s'il est déterminé que le terminal est enregistré auprès du serveur.

10. Système de communication sans fil selon la revendication 9, dans lequel le terminal (211, 212) est structuré pour recevoir un identifiant de station de base de la station de base (221), et initier l'appel en mode données si l'identifiant de station de base reçu est différent d'un identifiant de station de base mémorisé antérieurement.

11. Système de communication sans fil selon la revendication 9, dans lequel le terminal (211, 212) est structuré pour recevoir un identifiant de station de base de la station de base (221), et mémoriser l'identifiant de station de base reçu si l'identifiant de station de base reçu est différent d'un identifiant de station de base mémorisé antérieurement.

12. Station de base pour augmenter un taux de réception d'appels d'un terminal, la station de base comprenant :
- un récepteur (315) structuré pour recevoir des signaux du terminal (211, 212) ;
- un émetteur (305) structuré pour émettre des signaux vers le terminal ; et
- un processeur (320) opérationnellement couplé à un serveur (230) supportant une communication sans fil entre le terminal et la station de base, dans laquelle le processeur est configuré pour déterminer la présence ou l'absence d'enregistrement du terminal auprès du serveur et faire en sorte qu'un message pour une libération d'un appel en mode données soit transmis de la station de base au terminal ;
**caractérisée en ce que** le processeur (320) est en outre configuré pour :
- retarder la transmission du message pour la libération de l'appel en mode données jusqu'à ce qu'une période de temps prédéterminée soit écoulée, s'il est déterminé que le terminal n'est pas enregistré auprès du serveur ; et
- effectuer la transmission du message pour la libération de l'appel en mode données sans retard de la période de temps prédéterminée, s'il est déterminé que le terminal est enregistré auprès du serveur.

13. Station de base selon la revendication 12, dans laquelle le processeur (320) est en outre configuré pour déterminer la présence ou l'absence d'enregistrement après que le terminal s'est déplacé d'une zone de paquets associée avec une autre station de base jusqu'à une zone de paquets associée avec la station de base.
